# EUROPÄISCHE PATENTANMELDUNG

(11) **EP 2 030 797 A1**
(43) Veröffentlichungstag der Anmeldung: **04.03.2009**
(21) Anmeldenummer: 07016702.8
(22) Anmeldetag: 25.08.2007
(51) Int. Cl.: B41M 5/28

(54) **Optisch thermisch beschreibbare Nanobeschichtung**

(71) Anmelder: Mondi Business Paper Services AG, 3363 Ulmerfeld-Hausmening (AT)
(72) Erfinder: Kornherr, Andreas, Dr., 1100 Wien (AT); Schalkhammer, Thomas Dr., 3072 Kasten (AT)
(74) Vertreter: Landgraf, Elvira

(57) **Zusammenfassung**

Ein neuartiges Verfahren und das zur Beschriftung verwendete Schreibsystem zur farbgebenden Beschriftung von Oberflächen, **dadurch gekennzeichnet, dass** auf oder in einem Materials (1, 2) mehrere Dünnschichten von jeweils weniger als 800 nm aufgebracht sind, wobei eine Schicht oder Schichtgrenze elektromagnetische Wellen (3) zumindest teilweise reflektiert, einer transparente Schicht (4) mit einer Dicke von weniger als 700 Nanometer oberhalb und/oder unterhalb dieser Spiegelschicht angebracht vorhanden ist und darauf zumindest eine Schicht metallischer oder zumindest stark chromophorer Partikel (5) mit einer Massendicke von weniger als 50 nm alternativ deren chemischen Vorstufen oder alternativ ein metallischer Dünnfilm von weniger als 50 nm Dicke vorhanden ist, und der gesamte Aufbau durch die Einwirkung von Licht oder durch direkten Kontakt oder starke Annäherung an heiße Objekte räumlich definiert und strukturiert farblich verändert wird wobei beliebiger Text, Design oder graphische Information (6) durch eine Veränderung der Struktur der Nanoschichten sichtbar wird und zumindest ein Teil der Farben durch eine von der Dicke und dem Brechungsindex der Schicht (4) abhängige Resonanzfarbe hervorgerufen wird, wird vorgeschlagen.

## Beschreibung

Die Erfindung bezieht sich auf eine neuartiges Verfahren zur farbgebenden Beschriftung der Oberflächen von Papier, Folien, Kunststoff, Metall, keramische Oberflächen, Kunst- und Natursteinen, Lackschichten oder Korrosionsschutzschichten.

Farbgebende Beschriftungen von Materialien, wie Papier, Folien, Kunststoffen oder anderen Oberflächen erfolgen meist durch Drucken, beispielsweise mittels bekannter Tintenstrahldrucker, Laserdrucker und dergleichen.
Dazu wird der Drucker mit Druckfarben- bzw. Tonerpatronen bestückt, die darin enthaltenden Pigmentzusammensetzungen werden beim Druck auf dem zu bedruckenden Material abgelagert.

Aus der EP 677 738 A1 ist ein optochemischer Sensor zur Messung von Stoffkonzentrationen mit einer reaktiven Sensorschicht bekannt, der dadurch gekennzeichnet ist, dass eine Spiegelschicht (2), eine reaktive, insbesondere quellfähige Matrix (4) und eine Schicht (3) aus einer Mehrzahl von Inseln (5) aus elektrisch leitendem Material, insbesondere Metall, vorgesehen ist, wobei der Durchmesser der Inseln (5) kleiner ist als die Wellenlänge des für die Betrachtung bzw. Auswertung verwendeten Lichtes.

Aus AT 407165 B1 sind farbige Bleche, Metallteile und metallisierte Oberflächen bekannt, auf deren Oberfläche durch ein Eloxalverfahren eine Dünnschicht von weniger als 1000 nm aufgebracht ist, die an der Oberfläche eine Schicht von metallischen oder chromphoren Partikeln mit einer Größe von weniger als 200 nm trägt, die sichtbare Farbeffekte durch oberflächenverstärkte Clusterabsorption generieren.

In der JP 59-126468 sind z. B. plättchenförmige Pigmente auf der Basis von Glimmersubstraten beschrieben, die mit einer Schicht aus Titandioxid und Titansuboxiden und/oder Titannitriden beschichtet sind.

JP 60-60163 beschreibt plättchenförmige Pigmente auf der Basis von Glimmersubstraten, die mit einer ersten Schicht aus Titansuboxiden oder Titannitriden beschichtet und mit einer zweiten Schicht aus Titandioxid überzogen sind.

Aus JP 3052945, JP 3052943, JP 3052944, JP 3059065, JP 3059062 und JP 3059064 sind Epoxyharzzusammensetzungen bekannt, die laserbedruckbar sind.

In der WO 93/19131 ist ein Verfahren zur Herstellung plättchenförmiger Farbpigmente beschrieben, bei dem man mit Titandioxid beschichtete plättchenförmige Substrate mit einem ausgewählten Reduktionsmittel in fester Form in einer nichtoxidierenden Gasatmosphäre bei erhöhter Temperatur reduziert. Die hierbei erzielbare Körperfarbe reicht von grau über gelblich schwarz und bläulich schwarz bis hin zu schwarz, wobei sich die Interferenzfarbe durch Variieren der Titanoxid-Schichtdicken variieren lässt.

Pigmente die eine hoch-brechende Schicht als Basis verwenden sind z.B. unter dem Namen Iriodin® bekannt. Hierbei handelt es sich um mehrschichtige Interferenzpigmente aus Schichten unterschiedlicher Brechungsindices.

Aufgabe der Erfindung war es, ein Material bereitzustellen, das ohne Verwendung von toner-pigmenthaltigen Druckmitteln mit Informationen, wie Zeichen, Zeichenketten, Linien, Symbolen, Bildern und dergleichen versehen werden kann.

Eine weitere Aufgabe der Erfindung war es ein Verfahren zur Herstellung derartiger Materialien bereitzustellen.

Eine weitere Aufgabe der Erfindung war es eine Vorrichtung bereitzustellen, mit der die erfindungsgemäßen Materialien mit den entsprechenden Informationen versehen werden können.

Gegenstand der Erfindung sind daher Papier, Pappe, Wellkartons, Pigmentpartikel, Folien, spritz- oder druck-gegossene Kunststoffteile, Metall, keramische Oberflächen, Lackschichten oder Korrosionsschutzschichten beschichtet mit mehreren Dünnschichten, wobei das Material selbst oder eine erste Schicht eine Spiegelschicht ist, die selbst oder an der Schichtgrenze elektromagnetische Wellen (3) zumindest teilweise reflektiert, eine zweite transparente Schicht (4) oberhalb und/oder unterhalb dieser Spiegelschicht aufgebracht ist und auf dieser transparenten Schicht zumindest eine dritte Schicht metallischer oder stark chromophorer Partikel oder Nanopartikel (5) oder deren chemischen Vorstufen oder ein metallischer Dünnfilm aufgebracht ist, und der gesamte Aufbau durch die Einwirkung von Licht oder durch direkten Kontakt oder starke Annäherung an heiße Objekte räumlich definiert und strukturiert für das menschliche Auge erkennbar farblich verändert werden kann.

Ein weiterer Gegenstand der Erfindung ist ein Verfahren zur farbgebenden Beschriftung von Materialien, dadurch gekennzeichnet, dass auf oder in dem Material (1, 2) mehrere Dünnschichten aufgebracht werden, wobei das Material oder eine Schicht eine Spiegelschicht darstellt, die selbst oder an der Schichtgrenze elektromagnetische Wellen (3) zumindest teilweise reflektiert, eine transparente Schicht (4) oberhalb und/oder unterhalb dieser Spiegelschicht aufgebracht wird und auf dieser transparenten Schicht zumindest eine Schicht metallischer oder stark chromophorer Partikel (5) oder deren chemischen Vorstufen oder ein metallischer Dünnfilm aufgebracht wird und der gesamte Aufbau durch die Einwirkung von Licht oder durch direkten Kontakt oder starke Annäherung an heiße Objekte räumlich definiert und strukturiert für das menschliche Auge erkennbar farblich verändert wird.

Ein weiterer Gegenstand der Erfindung ist ein Verfahren zur Herstellung von optisch thermisch beschreibbaren Materialen, wie Papier, Pappe, Wellkartons, Pigmentpartikel, Folien, spritz- oder druck-gegossene Kunststoffteile, Metall, keramische Oberflächen, Lackschichten oder Korrosionsschutzschichten, dadurch gekennzeichnet, dass auf oder in dem Material (1, 2) mehrere Dünnschichten aufgebracht werden, wobei das Material oder eine Schicht eine Spiegelschicht darstellt, die selbst oder an der Schichtgrenze elektromagnetische Wellen (3) zumindest teilweise reflektiert, eine transparente Schicht (4) oberhalb und/oder unterhalb dieser Spiegelschicht aufgebracht wird und auf dieser transparenten Schicht zumindest eine Schicht metallischer oder stark chromophorer Partikel oder Nanopartikel (5) oder deren chemischen Vorstufen oder ein metallischer Dünnfilm aufgebracht wird.

Auf der Oberfläche des Materials, insbesondere eines Trägermaterials sind mehrere Dünnschichten von vorzugsweise weniger als 800 nm, besonders bevorzugt weniger als 500 nm Dicke aufgebracht, wobei eine Schicht oder Schichtgrenze elektromagnetische Wellen zumindest teilweise reflektieren kann (Spiegelschicht). Eine nanometrisch-dünne Abstandsschicht mit einer Dicke von vorzugsweise weniger als 800 Nanometer ist oberhalb und/oder unterhalb dieser Spiegelschicht angebracht. Eine weitere Schicht wird gebildet durch metallische oder zumindest stark chromophorer Partikel oder deren chemischen Vorstufen oder durch einen metallischer Dünnfilm von weniger als 50 nm Dicke.

Der Mehrschichtaufbau ist entweder direkt auf die Oberfläche des Trägermaterials aufgebracht oder jedoch auch auf zumeist plättchenartigen Pigmenten welche ihrerseits auf einer Oberfläche an das Trägermaterial gebunden sein können.

Diese Struktur kann gegebenenfalls mit einem bekannten Schutzfilm und/oder mit einer Schicht mit Licht streuenden Eigenschaften mit überzogen sein. Diese Licht streuende Schicht enthält beispielsweise Licht streuende Partikel, beispielsweise Latexpartikel die eine rückgestreute Lichtfarbe von weiß bis weißlich haben und durch Schmelzen der Partikel zu einer Schicht transparent wird.

Als Trägermaterial kommen Papier, Pappe, Wellkartons, Pigmentpartikel, Folien, spritz- oder druck-gegossene Kunststoffteile, Metalle, keramische Oberflächen, Lackschichten oder Korrosionsschutzschichten in Frage.

Die Spiegelschicht ist vorzugsweise eine metallische Schicht oder eine Schicht aus stark chromophoren Partikeln, ausgewählt aus der Gruppe Silber, Gold, Palladium, Platin, Kupfer, Indium, Aluminium, Nickel, Chrom, Vanadium, Molybdän, Wolfram, Titan, Niob, Tantal, Zirkon, Zinn, Germanium, Wismut, Antimon oder Silicium oder aus einem anderen leitfähigen Material, deren Verbindungen, Legierungen oder Vorstufen.

Die transparente nanometrisch dünne Abstandsschicht besteht vorzugsweise aus einer Schicht aus Calcium-, Magnesium-, Bariumfluorid oder Quarz oder auch aus polymeren Schichten. Die Poren einer porösen oder schaumartigen polymeren Zwischenschicht können mit einem Gas, vorzugsweise mit Luft gefüllt sein.

Die dritte Schicht aus metallischen oder stark chromophoren Partikel besteht vorzugsweise aus Elementen oder Verbindungen ausgewählt aus der Gruppe Silber, Gold, Palladium, Platin, Kupfer, Indium, Aluminium, Nickel, Chrom, Vanadium, Molybdän, Wolfram, Titan, Niob, Tantal, Zirkon, Zinn, Germanium, Wismut, Antimon oder Silicium oder aus einem anderen leitfähigen Material, deren Verbindungen, Legierungen oder deren Vorstufen.

Unter Verbindungen werden jeweils vornehmlich Metallsalze verstanden, wie als Oxalate, Carbonate, Formiate, Acetate, Hydroxide, Phosphate oder Hypophosphite. Werden Metallsalze eingesetzt können den Metallsalzen weiters Reduktions- oder Oxidationsmittel zugesetzt sein.

Als Reduktionsmittel kommen Salze der Ameisensäure, Oxalsäure, reduzierende Stickstoffwasserstoffverbindungen wie Hydrazine, oder anorganische Reduktionsmittel wie Zinn(II)salze, Hypophosphite, Dithionite oder Borwasserstoffverbindugen in Frage.
Als Oxidationsmittel kommen Peroxide, Percarbonate, Perborate, Nitrate, Chlorate, Perchlorate, bzw. analoge Bromverbindugen in Frage.
Vorzugsweise sind diese Zusätze daher laseraktivierbar.

Dabei werden dann unter Einwirkung von Wärme oder Licht (bevorzugt Laserlicht) Nanopartikel oder niedrige Oxide der Metallverbindungen erzeugt.

Der gesamte Aufbau wird durch die Einwirkung von Licht, primär Laserlicht oder einer anderen Lichtquelle ausreichender Stärke, oder durch direkten Kontakt oder starke Annäherung an heiße Objekte räumlich definiert und strukturiert farblich verändert, wobei beliebige Zeichen, Buchstaben, Zeichenketten Muster, Linien Bilder, Symbole, Designs oder graphische Information durch eine Veränderung der Struktur der Nanoschichten oder die Ordnung oder eine Umordnung der Nanopartikel oder eines Teils der Partikel sichtbar werden.

Die Zahl der metallischen oder stark chromphoren Partikel kann durch thermische Änderung oder Auflösung der metallischen Partikel, bevorzugt mit Hilfe von hochenergetischem Laserlicht zu farblosen Produkten, bevorzugt durch feste und laserverflüssigbare Säuren oder Laugen oder laseraktivierbare Oxidationsmittel in der Schicht erreicht werden.

Die Schichten können auch Laserlicht-absorbierende Zusätze aufweisen, wobei die Zusätze vorzugsweise Carboxlgruppen enthaltende Moleküle sind.

Die Ordnung oder Umordnung der beschichteten Partikel oder eines Teils der Partikel kann auch insbesondere durch thermische oder mechanische Veränderung der Schichten, wie beispielsweise Prägen erfolgen.

Der Mehrschichtaufbau (der aus vorzugsweise zumindest 3 Schichten besteht) bewirkt durch eine optische Resonanzverstärkung der Nanopartikel-Absorption mit der elektromagnetische Wellen reflektierenden Phasengrenze bzw. Spiegel bzw. einer Schicht aus Material (2/3) mit einem ausreichend hohen Brechungsindex eine starke Färbung des Objekts, wobei die optische 2- dimensionale Farbgebung/Strukturierung des Materials mit Laserlicht oder einer anderen lokalen Wärmequelle erreicht wird.

Dabei ist im Gegensatz zu Pigmentfarben im erfindungsgemäßen Aufbau die resultierende Farbe vom Abstand der Metallpartikel zur Phasengrenze und vom Brechungsindex der Materialien abhängig und nicht von der Eigenfarbe der Partikel.

Ungleich jeder auf Interferenz basierenden Farbgebung tritt dieser Effekt nur in Anwesenheit von zumeist metallischen Nanopartikeln an viel dünneren, nanometrischen Schichten auf und zeigt sich nur bei stark lichtabsorbierenden Partikeln.

Die Erfindung beruht dabei auf einem neuartigen Drucksystem das Materialien direkt mit dem Wärme und oder Licht (vorzugweise Laserlicht) beschreibbar macht.
Im Gegensatz zu einem Laserdruck oder Tintenstrahldruck oder ähnlichen Druckverfahren ist hierbei die Farbe bzw. deren Vorstufe als Nanoschicht bereits im Material integriert und wird durch das Laserlicht nur örtlich gezielt verändert.

Die Laserbeschriftung von Folien, Papier, Natursteinen, Fliesen, Keramik, emaillierten Oberflächen, passivierten eloxierten, lackierten bzw. transparentbeschichteten Metallen unter der Verwendung von Nanopartikeln und nanometrischen Dünnschichten, mit welcher insbesondere die Farbgestaltung von Oberflächen, Fassaden, Keramik im Sanitär- und Außenbereich, Schmuckgegenständen, aber auch Karosseriebleche oder Elemente im Dekorbereich in optimaler Weise erzielt werden kann, unterscheidet sich von üblichen pigmentbasierten Färbungen durch eine Vielzahl von Eigenschaften.
- Einstellbarer Farbton
- Alle Farben mit gleicher Chemie
- Stabil gegen Ausbleichen durch Licht
- Geringer Materialeinsatz (nur Nanometer-dicke Schicht gegenüber Mikrometerdicken Pigmentschichten)
- Smartes metallisches Aussehen - wenn gewünscht
- Geringe Toxizität (durch geringen Einsatz von Material und großer Auswahl von einsetzbaren Chemikalien)
- Sichtbare und unsichtbare Elemente kombiniert (primär im IR-Bereich des Spektrums)
- Maschinen-lesbar
- Extreme thermische Stabilität
- Kombinierbar mit Barcode und Labeltechnik
- Integration von Elementen die auf einen externen Stimulus wie Temperatur oder Feuchtigkeit mit Farbänderung reagieren.

Auch die Verwendung von täglich dem Licht ausgesetzten Produkten wie Druckwaren, Papier oder Folien im Außenbereich kann auf Grund der bleichechten Färbung als wichtiger Einsatzbereich des neuen Produktes gesehen werden.

Wichtig ist, dass das Untergrundmaterials selbst den optischen Effekt durch die lokale Änderung des Mehrschichtaufbaus (auch resonante Schicht genannt) durch Einwirkung von Laserlicht oder lokaler Wärme erzeugt und hierzu keine Pigmente (wie bei einem Laser-, Inkjet- oder Thermal-Transferdrucker) aufgebracht werden müssen und dies zu Farben mit optischen 2D/3D-Mikrostrukturen führt.

In einer typischen Anwendung kann auch die Bindung, die Abtrennung oder die Erzeugung von zumeist metallischen Partikeln im speziellen Nanopartikeln zur Farbgebung eingesetzt werden.

Auch eine Änderung der Dicke der Abstandsschicht wird durch die Resonanzverstärkung der Nanopartikel mit den strukturierten Brechungsindexschichten in ein leicht sichtbares optisches Signal umgewandelt.

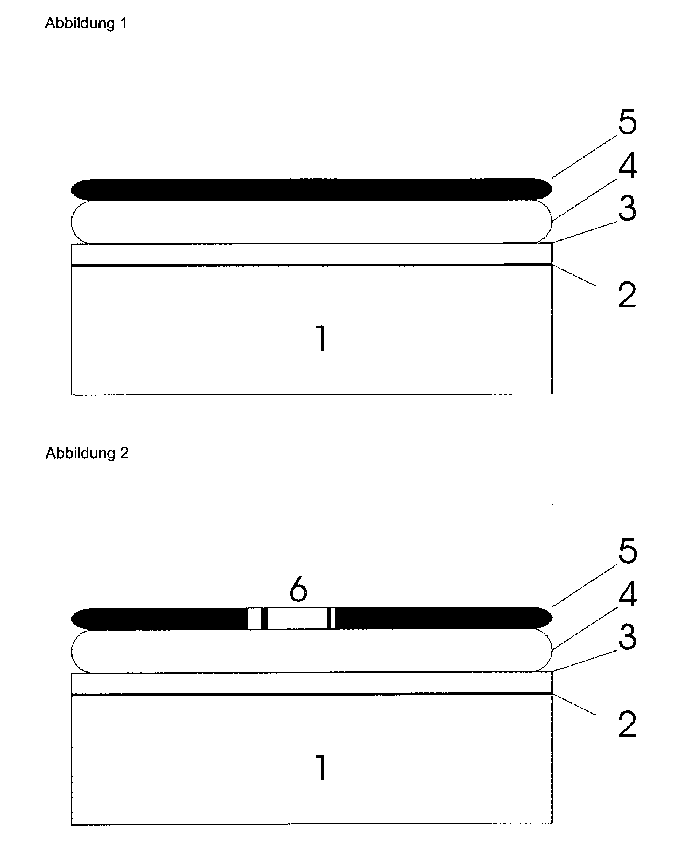

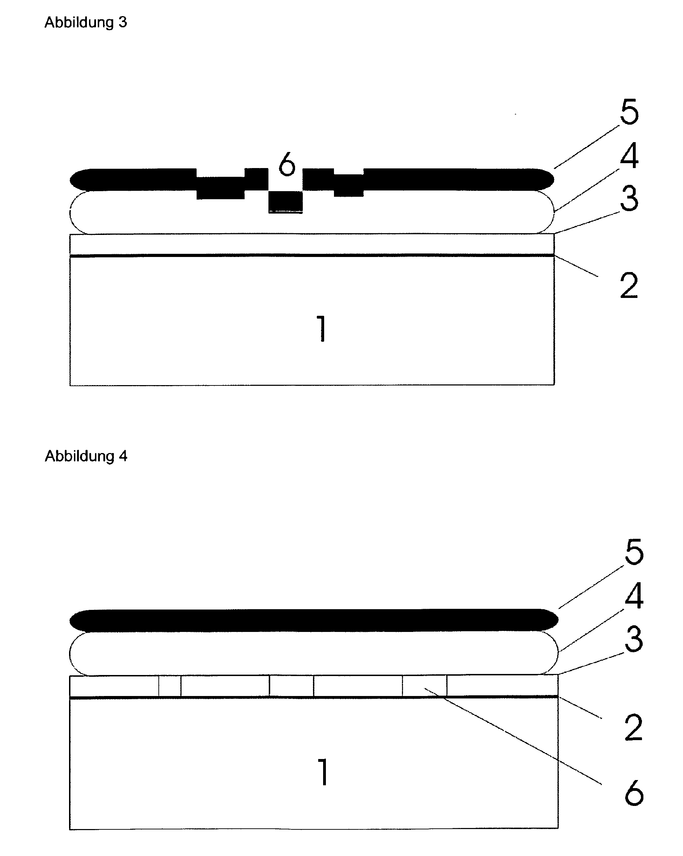

In den Abbildungen 1 bis 4 sind die erfindungsgemäßen Ausbauten dargestellt. Darin bedeuten 1 das Material, 2 die Oberfläche des Materials, 3 die Dünnschicht(en), 4 die Abstandsschicht, 5 die metallischen oder starkchromophoren Partikel oder deren chemische Vorstufen, 6, die optische Information, (Zeichen Zeichenketten, Symbole, Figuren Linien, Bilder).

Der Aufbau besteht zumindest aus der zumindest teilweise lichtreflektierenden Oberfläche eines Trägermaterials, einer Abstandsschicht, einer Partikelschicht und gegebenenfalls einer Deckschicht.

Um eine klare Farbgebung zu erhalten wird der Durchmesser der Nanopartikel vorzugsweise kleiner als 50 nm gewählt, besonders bevorzugt kleiner als 40 nm.
Für breitbandige Absorption können auch größere und assymetrische Partikel eingesetzt werden.
Ein dünner im Wesentlichen mehr oder weniger durchgehender Metallfilm von weniger als 40 nm Dicke kann an Stelle der Partikelschicht verwendet werden.

Eine Änderung der Belegungsdichte der Partikelschicht im molekularen Maßstab, oder Änderungen in der räumlichen Anordnung der gebundenen Nanopartikel am Material führt zu den charakteristischen Änderungen der optischen Erscheinung der Oberfläche.

Metallische oder metallartige Partikelfilme mit einem mittleren Nanopartikeldurchmesser kleiner als 500 nm (vorzugsweise kleiner als 100 nm, besonders bevorzugt kleiner als 40 nm) weisen starke schmalbandige Reflexionsminima auf, deren spektrale Lagen extrem empfindlich von der räumlichen Anordnung insbesondere dem Abstand zu Phasengrenzen abhängen. (Sehr große Partikel streuen mehr als dass sie absorbieren).

Der Aufbau kann selbst geringste Änderungen der Oberflächenbelegung mit Nanopartikeln, der Struktur der Phasengrenze Material/Dünnschicht, bzw. der Brechungsindices in klar erkennbare Farbänderungen umwandeln d.h. entweder in eine Extinktionsänderung bei einer bestimmten Wellenlänge, oder in eine spektrale Verschiebung des Absorptionsmaximums.

Im Sinne des Aufbaus kann hier ein besonderer Effekt beobachtet werden. Während die Absorption von Chromophoren unabhängig vom Beobachtungswinkel ist, verschiebt sich das spektrale Reflexionsminimum von resonanten Schichten mit dem Beobachtungswinkel mehr oder weniger stark. Daher ändert ein erfindungsgemäß beschichteter Gegenstand seine Farbe abhängig vom Beobachtungswinkel. Dies kann je nach Aufbau gewünscht oder durch die adäquate Wahl der Komponenten nahezu unsichtbar gering gehalten werden.

Erfindungsgemäß werden primär Nanopartikel oder extrem dünne Nanoschichten erzeugt, verändert oder zerstört.

Erfindungsgemäß sind eine Spiegelschicht oder nur eine reflektierende Oberfläche, eine Abstandsschicht von einigen zehn (maximal wenigen hundert Nanometern) Nanometern und darauf metallische oder chromophore Schichten von bevorzugt wenigen Nanometern mit einer Massendicke von 1 - 20 nm eingesetzt.

Nur so kann beispielsweise der Laser in der zur Verfügung stehenden Zeit (typischerweise µs oder weniger) die Schicht chemisch durchgehend und dauerhaft so verändern, dass die Resonanzfarbe visuell geändert wird. "Massive" Schichten im Bereich von 50 nm oder mehr führten zu einer starken Eigenerwärmung der Materialien, welche z.B. bei Papier zu einer "Brandbeschriftung" mit entsprechender Abgasmenge und toxikologisch bedenklichen Produkten führt.

Erfindungsgemäß kann das Drucksystem durch den Einsatz von stark chromophoren Resonator-Strukturen diese Problem vermeiden und durch eine chemische Umwandlung von Teilen der Struktur ohne signifikante Abgabe von gasförmigen Produkten den Schreibvorgang im Büroumfeld ermöglichen. Neben der Dickeänderung des Resonators, der Auflösung von Partikeln und der Veränderung des Spiegels wird bevorzugt die Generierung von Nanopartikeln aus farblosen Vorstufen gewählt.

Die Generierung der Nanopartikel erzeugt dann erst in-situ einen Resonanzfarbton nach Reaktion einer farblosen oder schwach gefärbten Schicht von Precursorverbindungen.

Beispielhaft kann hier die Umwandlung von Silberacetat in dunkle oxidische Pigmente, die Umwandlung von Wismutsalzen wie z.B. Wismutoxalat, basisches Wismutcarbonat oder basisches Wismutnitrat in schwarze, gelbe, orange oder braune Pigmente, die Umwandlung von Nickeloxalat oder Kobaltoxalat in schwarze bzw. dunkel gefärbte Oxide, die Umwandlung von labilen Kupferverbindungen in Kupferoxide oder metallisches Kupfer genannt werden.

Die transparente Schicht, insbesondere deren Dicke kann durch thermische Veränderung, Schäumen, Vernetzen oder thermischen Kollaps bevorzugt mit Hilfe eines Lasers oder thermisch eingestellt werden.

Alle diese Reaktionen laufen bei Temperaturen von unter 400 °C bevorzugt um etwa 250 °C.
Extrem reaktive Verbindungen die bereits bei 120 °C oder weniger eine chemische Umwandlung zeigen werden primär nicht eingesetzt, da sie die nötige Langzeitstabilität und Prozessierbar der Materialen negativ beeinflussen würden.

Auf stabilen Oberflächen kann die Resonanzschicht direkt aufgebracht werden, Papier und große insbesondere 3-dimensionale Objekte werden hier mit kleinen Partikeln mit der oben beschrieben Struktur überzogen.

Diese Partikel, auf die der Mehrschichtaufbau aufgebracht ist, weisen vorzugsweise eine Größe von maximal 3 mm auf, besonders bevorzugt 0,5 bis 60 µm und sind vorzugsweise flache metallische Partikel oder anorganische Plättchen wie Glimmer, Kaolin, Talk oder Glas.

Papier kann jedoch auch direkt mit dem Farbeffekt versehen werden und die Zellulosefaser - Calciumcarbonatmischung mit Spiegel, Abstands- und Nanopartikelschicht überzogen werden - die beobachteten Farben sind durchaus sehr intensiv und farbstark.
Bei Verwendung von Partikeln als Träger des Mehrschichtaufbaus werden zur Aufbringung auf Papier, Wellpappe oder Karton die in der der Papierindustrie üblichen Verfahren der Papierbeschichtung, insbesondere der letzten Papierbeschichtungsschritte verwendet. Derartige Papierbeschichtungsverfahren sind aus dem Stand der Technik bekannt und dem Fachmann geläufig.

Unabhängig vom Trägermaterial ist es vorteilhaft die Partikel auf die Oberfläche des beschichteten Materials mit einem Adhäsionsmittel, beispielsweise mit einenm Kleber auf Stärkebasis oder auf Basis biologisch verträglicher und/oder abbaubarer Polymere zu binden. Derartige Adhäsionsmittel sind dem Fachmann aus dem Stand der Technik bekannt.

Die Nachbeschichtung der Oberfläche erfolgt mit einem Material, welche in der Lage ist die Laserenergie aufzunehmen, die Hitze an die Nanopartikelschicht bzw. deren Precursor weiterzuleiten und den gesamten Aufbau zu schützen. Bei einer Wellenlänge des verwendeten Lasers von z.B. 10 µm sollte diese Schicht einige Mikrometer stark sein damit die Laserenergie mit maximaler Intensität absorbiert werden kann.

Viele Polymere sind hierzu geeignet, beispielsweise PVP, PVAc, PVP-co-PVAc, Cellulose und deren Derivate wie Ether oder Ester, Stärke und deren Derivate, bis zu Epoxidharzen und Alkydharzen für langzeitfeste Beschriftungen auf Metall und Kunststoffoberflächen. Bevorzugt verwendet werden Polystyrol, Polyvinylacetat, Celluloseestern oder Ethern, anderen Vinylpolymeren, Acrylaten, Methacylaten, Polyalkydharzen, oder deren Mischpolymeren bzw. Mischungen besonders bevorzugt Polysytrollatex.

Die Partikelschichten werden durch chemische Prozesse, Aufdampfen, Sputtern, adsorptive Anlagerung aus Lösung, kovalente Kopplung aus Lösung, oberflächen-katalysierte Verfahren, Aufsprühen oder Drucken mittels bekannter Druckverfahren, wie Flexo- Tief-, Sieb-, Offset- Digitaldruckverfahren. Walzenauftragsverfahren mit Gleich- oder Gegenlauf, Curtain-Coating und dergleichen entweder direkt auf das Material aufgebracht oder zuerst auf Pigmentpartikeln gebildet werden.
Die Pigmentpartikel werden dann in den branchenspezifischen Auftragsprozessen auf die Oberfläche der zu bedruckenden Objekte übertragen und dort gebunden.

Das Material dieser Partikel sind zumeist korrosions-stabile Metalle wie Gold, Silber, Palladium, Kupfer, Nickel, Chrom, Zinn, Titan, Tantal, Niob, Wolfram, Molybdän, Wismut, Antimon, Germanium oder Silicium.

Andere Metall können aus Kostengründen oder Stabilitätsgründen (z.B. Aluminium) begrenzt verwendet werden

Unedlere Metalle können mit einem inerten Schutzfilm aus z.B. Aluminiumoxid, Titanoxid, Zirkonoxid, Zinnoxid, Quarz, festhaftenden Oxidationsfilmen oder auch Polymeren, Schichten aus (Poly)carboxylate, (Poly)phosphaten, (Poly)phosphonaten gegen Korrosion geschützt, Verwendung finden.

Diese Schutzschichten beeinflussen durch ihre Dicke natürlich die Farbe bzw. den Brechungsindex des Schutzmaterialfilms.
Im Wesentlichen können mit unterschiedlicher Farbqualität auch beliebige andere Metalle und auch Legierungen aller Art oder aber auch Farbpartikel von geeigneter Größe und geeignetem (bevorzugter Weise zumeist stabilen) optischem Verhalten (z.B. Präzipitate aus Porphyrinen, Phtalocyaninen o.ä) dienen.

Vorzugsweise sind die im Mehrschichtaufbau eingesetzten Metalle oder Metallsalze in einer Kläranlage im Recyclingprozess wiedergewinnbar, vorzugsweise zu bis zu 80%.

Es können erfindungsgemäß zur Erzielung eines Druckbildes alle Materialien des Aufbaus thermisch-optisch modifiziert werden und so entweder der Spiegel, der Abstand Spiegel-Nanopartikel oder die Zahl der Nanopartikel über oder unter der Abstandschicht geändert werden um die gewünschten drucktechnischen Farbeffekte zu erreichen.

Die erfindungsgemäßen technologischen Neuerungen sind:
• Farbstabil, nicht bleichbar bedruckte Papiere, Folien und Materialoberflächen
• Erzeugung und Veränderung der Farbe durch lokale Laserenergie oder Wärmetransfer
• Frei wählbarer Farben ohne Pigmente
• Aufbau durch nanometrisch dünne Schichten

Die für die thermische Beschriftung benötigten Lichtquellen weisen bevorzugt geringe Strahlendivergenz, geringe Linien-/Bandbreite: (eine schmale Linienbreite ist die Frequenzreinheit der erzeugten Strahlung), große Energiedichte (durch die starke Bündelung und die Selbstverstärkung der Laserstrahlen im Resonator) und große zeitliche und räumliche Kohärenz. Damit sind primär Laser als Lichtquellen geeignet. Andere Lichtquellen sind nach geeigneter optischer Aufbereitung ebenfalls zu verwenden (LEDS, Hochenergielampen mit Hg, oder Metalldampf o.ä.) weisen jedoch zumeist zu geringe Energiedichte auf. Thermische Auslösung des Effekts durch heiße Oberflächen ist ebenfalls möglich und kann analog dem Thermodruckern mit geringer Geschwindigkeit vorgenommen werden.

Mögliche Lasertypen sind Festkörper-Laser, Halbleiter-Laser,. Flüssigkeits-Laser,. Gas-Laser und chemische Laser.
Basierend auf dem physikalische Verfahren unterscheidet man: optisch gepumpte Laser, Gasentladungslaser und chemische Laser, bei denen die Pumpenergie durch chemische Prozesse geliefert wird.

Als ältestem Lasertyp sind Festkörper-Laser bekannt, sie zeigen jedoch eine eher geringe Strahlqualität.
Die wichtigsten Festkörper-Laser sind der Rubin-, der Neodym-YAG (Nd:YAG) und der Nd:Glas-Laser

Halbleiterlaser, LED's, Kryptonbogenlampen und Halogenlampen für den cw-Betrieb und Xenonblitzlampen in insbesondere für den Pulsbetrieb geeignet.

Der Kupferdampflaser ist der bekannteste Vertreter einer Reihe von Metalldampflasern, die ähnliche Betriebsdaten haben (Bleidampflaser, Calciumdampflaser, Golddampflaser, Mangandampflaser, Thalliumdampflaser, Indiumdampflaser). Allen diesen Systemen ist gemeinsam, dass sie recht hohe Betriebstemperaturen haben, nur gepulst betrieben werden können aber dafür sehr große Verstärkungsfaktoren und zum Teil auch hohe Wirkungsgrade aufweisen.

Die Vorteile von Halbleiter-Lasern sind hoher Wirkungsgrad, nur eine geringe Gleichspannung ist für den Betrieb notwendig, Laserdioden sind sehr klein, sehr hohe Lebensdauer (bis zu Millionen Betriebsstunden) und. Laserdioden sind für Dauer-, Teildauer- und Pulsbetrieb geeignet.

Die Laser-Gruppe der Gaslaser ist sehr groß - verschiedenste Gase sind für Laseremission geeignet. Diese Gase werden in Gasentladungsröhren mit Längen zwischen 10 bis 200 cm gefüllt. Gepumpt werden diese Laser hauptsächlich durch eine elektrische Hochspannungsentladung der Elektroden. Die Entladungsströme können von wenigen mA bis 100 A liegen. Beispiel ist unter anderem der Helium-Neon-Laser.

Der lonen-Laser verwendet als aktives Medium ein einziges Gas z.B. Argon oder Krypton. Die Laseremission stammt aber hier nicht von neutralen, sondern von ionisierten Atomen. Besonders interessant ist der mit dem dreifach ionisierten Sauerstoff arbeitende Laser. Neben einigen UV Linien gibt es einen starken Laserübergang mit gelbgrünen Bereich bei 559 nm. Diese Linie zeichnet sich im Impulsbetrieb durch eine sehr hohe Verstärkung aus.
Der Excimer-Laser leitet seine Bezeichnung leitet von dem englischen Ausdruck "excited dimer" ab, was soviel bedeutet wie "angeregtes zweiatomiges Molekül". Diese Moleküle zerfallen aber, sobald keine Anregung mehr vorhanden ist und geben ihre Energie in Form von Laserstrahlung ab. Am häufigsten werden für diesen Lasertyp Verbindungen von Edelgasatomen mit Halogenatomen verwendet, wie zum Beispiel Argonfluorid (ArF), Kryptonfluorid (KrF) und Xenonchlorid (XeCl). Excimer-Laser sind leisungsstarke Pulslaser mit Wellenlängen im UV oder Blaubereich des Spekrums. Mit ihrer Hilfe können Kaltschnitte des menschlichen Gewebes erzielt werden, also Schneiden des Gewebes, ohne es zu erwärmen.
Ein weiterer Laser ist beispielsweise der CO-Laser.
Der Kohlendioxidlaser (CO₂-Laser), ist ein elektrisch angeregter Gaslaser. Er zählt neben den Festkörperlasern zu den am häufigsten eingesetzten und leistungsstärksten industriell eingesetzten Lasern.

Die N₂-Moleküle werden im Resonator durch eine Gasentladung angeregt.. In diesem angeregten Zustand können die N₂-Moleküle sehr lange (- 1 ms) bleiben und es besteht somit eine hohe Wahrscheinlichkeit, dass sie mit CO₂-Molekülen kollidieren und diese anregen. Typische Ausgangsleistungen liegen zwischen 10 W und 15 kW. Er wird vorrangig zur Materialbearbeitung eingesetzt. Die Strahlung solcher CO₂-Laser ist linear polarisiert. Mit vergleichsweise einfacher Technik werden sehr hohe Ausgangsleistungen bei hohem Wirkungsgrad erzielt.
und durch ihre hohe Brechzahl auch eine hohe Reflexion so daß sie als Auskoppelspiegel verwendet werden können.
Der Helix TEA Laser ist ein transversal erregter bei hohem Druck arbeitender CO₂ Laser.
Die Wellenlänge des CO₂-Lasers liegt im Infraroten und kann deshalb kann - anders als bei Neodym-YAG-Lasern oder Diodenlasern - nicht in Glasfasern geführt werden..
Die primäre Bauform der Nanowriterlaser sind diffusionsgekühlte CO₂-Laser. Sie verwenden eine mit Hochfrequenz betriebene Plasmaentladung zwischen zwei eng beieinander stehenden Platten, die zugleich die Kühlung durch Diffusion bewirken. Der Strahlweg verläuft mehrfach hin- und her zwischen den Spiegeln entlang, die Auskopplung findet am verkürzten Ende eines der Spiegel statt. Sie werden in oft auch als slab-Laser bezeichnet. Bei kleinen Leistungen bis 300 W verläuft der Strahl längs zu zwei langgestreckten Elektroden, bei diesen Lasern findet kein Gasaustausch statt. Bei Impulsbetrieb mit kurzen Pulszeiten (0,01...1µs) kann bei kleinen Leistungen auf Kühlung und Heliumzusatz verzichtet werden. Solche TEA-CO₂-Laser (von engl. transversal excited atmospheric pressure) werden z.B. mit Marx-Generatoren gespeist und als Blümleingenerator aufgebaut. Sie sind quer angeregt und arbeiten auch bei Normaldruck.
Der im Leistungsbereich von 500 W - 15kW eingesetzte längsgeströmte CO₂-Laser ist am weitesten verbreitet. Bei "langsam geströmten" Lasern erfolgt nur ein Gasaustausch, die Kühlung findet durch Diffusion an den Rohrwandungen statt. Das im Rohrsystem "schnell längsgeströmter" Laser eingefüllte Gasgesmisch wird zwecks Gasaustausch und Kühlung mit einer weiteren Pumpe (Roots-Pumpe oder Turbine) umgewälzt. Bei sehr großen Leistungen sind Entladungen und Gasströmung quer zur Strahlrichtung (quergeströmter CO₂-Laser), sodass ein besonders schneller Gasaustausch möglich ist. Geströmte Laser sind jedoch bedingt durch die nötige Gasversorgung nicht sinnvoll als Nanowriterlaser einzusetzen.

Das Nanowriter Lasersystem enthält bevorzugt zumeist einen versiegelten Kohlenstoffdioxid- (CO₂) Laser, der intensive und unsichtbare Laserstrahlung mit einer Wellenlänge von 10,6 Mikron im infraroten Spektrum produziert

Laser werden nach der Verordnung der WHO seit 1977 in 5 verschiedene Schutzklassen eingeteilt:
Unter anderem müssen die folgenden Sicherheitsmerkmale müssen in das System integriert werden, um noch der Klasse 1 Klassifizierung (Laserlicht ist ungefährlich) zu entsprechen:
   Das ganze System ist völlig in einem Schutzgehäuse eingeschlossen. Dieses verdeckt den Laserstrahl unter normaler Verwendung vollständig. Das System hat ein Sicherheitssperrsystem. Das Öffnen des Gehäuses schaltet den (CO₂)-Laserstrahl aus.
   Der unsachgemäße Umgang mit dem Lasersystem wird durch technische Vorrichtungen ausgeschaltet da der Laserstrahl physische Verbrennungen und schwerwiegende Augenschäden verursachen kann. Dringt ein Laserstrahl ins Auge, so wird die maximal zulässige Temperatur überschritten und die eng angeordneten Sehzellen (Zäpfchen) ziehen sich in die Netzhaut zurück, wo sie vom Laserstrahl zerstört werden.
   Der Laserstrahl kann eine Entzündung von brennbaren Materialien verursachen und ein Feuer verursachen. Das Lasersystem wird daher nie ohne stete Überwachung durch interne Sensoren betreiben.
   Ein richtig konfiguriertes, installiertes, gewartetes und betriebsfähiger Filter ist die Voraussetzung für die Benutzung des Lasersystems. Dämpfe und Rauch beim Schreibprozess sind minimal, da es sich hierbei nicht um Gravierprozess mit Prozessgasen handelt jedoch soll die geringfügig Abtragung von Material wenn nötig durch ein Aktivkohlefilter gebunden werden.
   Der Einsatz von für den Laserschreiber nicht geeigneten Materialien kann toxische und beißende Dämpfe produzieren.
   Innerhalb der Elektronik- von Laseranlagen sind gefährliche Spannungen vorhanden. Der Eingriff in die Maschine ist für die normaler Verwendung nicht notwendig ist, und ist technisch unterbunden.
   Sicherheitsaufkleber sind im System angebracht. Er ist nur sichtbar, wenn das Gehäuse unter Anwendung von Gewalt geöffnet ist. Außerdem ist er auf der Laser-Tube einmal neben der Laseraustrittsöffnung, sowie auf der Oberseite der Tube. Diese Aufkleber sind nur dann sichtbar, wenn die Laser-Tube freigelegt oder herausgenommen wird und sind unter normalen Betriebsbedingungen nicht sichtbar.
   Die Raumtemperatur sollte zwischen 17 und 27 Grad Celsius bleiben.
   Die Luftfeuchtigkeit sollte weniger als 70% betragen.
   Das Lasersystem ist eine einzige Ausgabeeinheit - Laserdrucker, (eine Rasterbasierte Ausgabeeinheit sowie auch Tintenstrahl-, Bubblejet und Nadeldrucker( oder ein Plotter ("Vektor"-basierte Ausgabeeinheit). Der Unterschied ist, wie Zeichen und andere Graphiken geformt sind. Ein Rasterdrucker macht Vor- und
   Zurückbewegung um das Zeichen zu erstellen, während ein Vektorplotter dem Umriß des Zeichens folgt. Ein Lasersystem beherrscht sowohl Raster- als auch Vektorbewegungen. Der Lasersystemdruckertreiber arbeitet direkt mit Windows, Unix (Linux,..) o. ä. Anwendungsprogrammen zusammen, um die richtige Abbildung an das Lasersystem zu senden.
   Das Lasersystem ist eine Ausgabeeinheit genau wie ein Drucker oder Plotter. Nachdem die Graphik auf dem Rechnersystem erstellt ist, drucken Sie die Graphik auf dieselbe Weise aus als würden Sie auf einem Laserdrucker oder einem Plotter drucken. Diese Information wird über ein Kabel (typischerweise USB) zu dem Lasersystem gesandt und ist dann im Lasersystem-RAM gespeichert. Sobald der Anwender die Datei in (vollständig oder teilweise) den Speicher geladen hat kann die Verarbeitung beginnen.
   Der einzige wichtige Unterschied zwischen einem typischen Laserdrucker und dem Nanowriter ist, dass der Lasersystemdruckertreiber zusätzlich steuern kann, wie hoch die Energie des Lasers ist.
   Die Laserintensität kann rein schwarz weiß gesteuert werden oder wird dadurch kontrolliert, dass jeder bei der graphischen Zeichnung die verwendete Farbe einen Prozentsatz der Intensität von 0 - 100 % zuweist. Da der Laser proportional gepulst oder anders in seiner Intensität gesteuert wird ist, stellt dieser Prozentsatz dar wie lange die Laserpulse dauern oder wie hoch die Intensität des Laserlichts ist. Grundsätzlich wird die Intensitätseinstellung direkt darauf bezogen, wie tief der Farbeffekt ist.
   Eine Geschwindigkeitseinstellung über Galvanospiegel, rotierendem Spiegel und Vorschub des Mediums kontrolliert, wie schnell das Bewegungssystem relativ zur Maximalgeschwindigkeit des Systems arbeitet. Zum Beispiel ist 100% Geschwindigkeit 100 Zentimeter sind 10% Geschwindigkeit gleich 10 Zentimeter. Beim Schreiben ist dies die Rate, in der sich der Laserstrahl über das Medium bewegt. Hohe Intensitätseinstellungen und hohe Geschwindigkeiten produzieren ähnliche Effekte wie geringe Intensität und langsame Geschwindigkeit - bei geringerer Druckgeschwindigkeit des Systems. Im Rastermodus entspricht oft PPI (Laserpulse/inch) den typischen dpi-Werten eines Druckers.
   Geringe Pulswerte bei sehr hoher Energie führen zur Perforation des Papiers - dies ist nicht anzustreben da hier toxische Abgase gebildet werden die einer entsprechenden Absaugung bedürfen..
   Zur Ablenkung des Laserstrahls werden zumeist entweder rotierende Spiegel, Q-Schalter oder verschiedene Arten von Galvanometern verwendet. (Open loop, closed loop Galvanometer) Vom Computer erhält das Galvanometer eine Spannung - es entsteht eine kurze Spannungsspitze und es wird sehr schnell beschleunigt. Die vom Sensor zum Computer gelieferte Position wird nun laufend verglichen. Steht die Achse nun auf dem gewünschten Punkt, wird innerhalb weniger Nannosekunden die Polarität am Galvnometer gedreht, d. h. es wird ein kurzer Bremsimpuls gegeben, welcher die Achse schlagartig zum Stillstand bringt. Überschwinger sind ausgeschlossen und auch die Umlaufgeschwindigkeit wesentlich höher. Das Austasten des Laserstrahl (blanking) kann mit Spiegeln, Q-Schaltern oder Galvanometer erfolgen - sonst könnten mit rotierenden Spiegeln oder Galvanometern nur geschlossene Linienzüge bzw. Grafiken erzeugen werden. Um diese Pixel und Linien auszublenden verwendet man meist ein weiteres Galvanometer, auch Shutter genannt. Dieses Galvo wird zwischen der Ablenkeinheiten und dem Laser positioniert. Der Computer schickt dann bei Bedarf ein Signal zum Shutter-Galvo, welches in den Strahlengang des Lasers einschwenkt und den Strahl somit unterbricht. Der Laserstrahl muss, um von einem Blanking-Galvo sehr schnell aus- und eingeblendet zu werden.

Der Lasereffekt: Lasergestützte Bearbeitung verschiedenster Materialien sind heutzutage nicht mehr wegzudenken, denn diese Werkzeuge haben viele Vorteile: Laserstrahlen können feine, scharf abgegrenzte Stellen bearbeiten, Lasergeräte weisen eine gute, präzise Programmierbarkeit auf, Laseranlagen weisen eine sehr gute Reproduzierbarkeit, d. h. nur kleinste Toleranzen auf, Laserstrahlen weisen keinen Verschleiß auf, daher sind sie sehr profitabel, Schweißen und Löten, wobei man vor allem die Eigenschaft nutzt, dass man dazu nur sehr kleine Bereiche erhitzt, Schneiden und Bohren (mit gepulsten Lasern) für Bohrdurchmesser < 0,5 mm sowie Laserbeschriften - sehr schnell, mit relativ wenig Aufwand und mit sehr guter Qualität

Physikalisch betrachtet unterteilt sich die Wechselwirkung zwischen Strahlung und Materie in vier Kategorien: Aufheizen, Schmelzen, Verdampfen und lonisieren. Welche dieser Kategorien verwendet wird, hängt sowohl von der Anwendung (Schweißen, Löten, Schneiden, Bohren, Beschriften...) ab, als auch vom Material. Um eine klare Kontur der Markierung zu erhalten, muss eine Ausbreitung der Wärmeeinflusszone verhindern werden. Erreicht wird dies durch eine sehr hohe Energiedichte, wodurch das Material innerhalb von Nanosekunden erhitzt wird.

Beim Verfärben von Kunststoffen wird eine Markierung ohne Beeinträchtigung der Oberflächenqualität durch lokale Veränderung der Farbe erreicht. Durch geeignete Wahl des Kunststoffes in Kombination mit der Wellenlänge des Laserlichts wird bei der Bestrahlung ein Farbumschlag erzeugt. Entsprechend der Auswahl der Werkstoffe können mit dem Verfahren Markierungen unterschiedlicher Farbe erzeugt werden. Weiterhin gibt es auch bei Kunststoffen die Möglichkeit, durch Materialabtrag ein Schwarz-weiß zu erzeugen. Beispielsweise können lichtundurchlässige Materialschichten abgetragen und das transparente Grundmaterial freigelegt werden. Dadurch können Markierungen, die durch Lichteinfall von vorn und Beleuchtung von hinten erkennbar sind, erzeugt werden. Eine weitere Möglichkeit ist das Erhitzen des Kunststoffs durch den Laser, so dass ein Aufwurf entsteht. Dieser Aufwurf bleibt auch nach der Abkühlung erhalten und stellt somit die Markierung dar. Diese Hochtemperatureffekte erzeugen jedoch toxische Abgase und Materialänderungen und sind im Bürobetrieb unerwünscht bzw. untragbar. Der Nanowriter kann die gewünschten Effekte in nanodünnen Schichten ohne massive Emission von Abtrageprodukten erzielen.

Kunststoffe können mit wesentlich geringeren Leistungen bearbeitet werden als Metalle. Ein Grund dafür liegt in der Oberflächenbeschaffenheit der Metalle, die im blanken Zustand Reflexionswerte von 90 bis 100 Prozent aufweisen können. Weiters spielen bei der Materialbearbeitung Wärmeleitfähigkeit und Schmelztemperatur des Metalls eine große Rolle. Je höher die Schmelztemperatur ist, desto schwieriger ist die Laserbearbeitung.

Welcher Lasertyp zur Bearbeitung eingesetzt wird, hängt auch von dem Brennfleck-Durchmesser ab, den man mittels einer geeigneten Optik fokussiert, um größere Leistungsdichten und feinere Bearbeitungsmöglichkeiten zu erreichen. He-Ne-Laser können auf etwa 1 µm, Nd:YAG-Laser auf 5 µm und CO₂-Laser (die auch die meist verwendete Lasergruppe für Materialbearbeitung darstellen) können etwa auf 25 µm fokussiert werden. Die Pulsdauer muss ebenfalls bei der Wahl des Lasers berücksichtigt werden, denn vor allem Bohren und Schneiden wäre ohne gepulste Laser (meist Nd:YAG-Laser) nicht möglich.

Bei hoher Laserleistung tritt in jedem Falle ein Verdampfungsbereich auf, dem sich eine Schmelz- und eine erhitzte Zone anschließen. Je nach Anwendung wird nun ein Werkstück mit einem gepulsten, oder kontinuierlichem Laser bestimmter Leistung und Strahlen-Fokussierung gezielt bearbeitet.

Der Gesamtenergieverbrauch des Systems ergibt sich primär nur aus der Laserleistung plus Abwärme, der Energieverbrauch des Vorschubs ist dagegen unerheblich, ein zusätzlicher Fixierprozess des Toners mit Hitze ist primär nicht vorgesehen kann aber sekundär mit dem Verfahren kombiniert werden. Daher verbraucht das Gerät primär nur im direkten Druckbetrieb Energie. Typische Laserdrucker haben derzeit "Standby"-Leistungen zwischen etwa 5 und 30 Watt und ziehen im Druckbetrieb bis zu 1000 W Leistung. Der Nanowriter kann hier auch durch geringeren Energieverbrauch und das Fehlen jeglicher Aufheizzeit bis zum ersten Blatt sich deutlich von bestehenden Druckverfahren abheben.

Mit der zunehmenden Verpackung von Produkten und der damit einhergehenden produktspezifischen Markierung gewinnt die Verpackungsperforation (Aufreiß-, Abreiß- oder Trennhilfen) an Bedeutung. CO₂-Laserstrahlung erlaubt ein flexibles, schnelles und exaktes Perforieren und Schneiden verschiedenster Materialien ohne Rückstände am Werkstück, wie beispielsweise dünner Kunststoff- und Verbundwerkstoff-Folien, Laminate, Textilien und Papier. Dieser Modus kann als Zusatzoption im Nanaowriter integriert werden.

Als reaktive Schichten können erfindungsgemäß alle Schichten des Aufbaus verwendet werden die zur Farbgebung beitragen. Hierbei ist insbesondere auf die Interaktion mit dem Laser zu achten um die nötige Energie optimal zu nutzen und damit die Schreibgeschwindigkeit zu maximieren.

Ein CO₂-Laser kann auf eine Wellenlänge von 10.6 µm eingestellt werden (Standardeinstellung) oder nahe 9.6 µm. Diese Wellenlänge wird von Silikaten und ähnlichen Strukturen deutlich besser (Unterschied mehr als eine Zehnerpotenz) aufgenommen. Ein Nd:YAG Laser (1.06 µm) kann ebenfalls verendet werden benötigt aber den Einsatz eines zusätzlichen Chromophors zur gerichteten Einbringung der Laserenergie. Die Transformation einer porösen SiO₂-Gel-Schicht in eine solide Silikatschicht unter deutlicher Verringerung der Schichtdicke (Farbeffekt) kann daher z.B. mit heißer Luft, heißen Oberflächen (Stempel, Pin) oder mit Laserenergie eines CO₂ oder Er:YAG oder Ho:YAG (yttrium aluminium gamet) Laser erzeugt werden. Um Laserenergie optimal in einer Schicht zu absorbieren kann dem Material ein Farbstoff, vorzugsweise ein anorganisches Salz mit 0.1 bis 5 Gewichtsprozent, zugegeben werden - hierbei sind Kupfersalze, Chromsalze oder seltene Erden mögliche Chromophore.

Erfindungsgemäß werden für den normalen Bürobedarf Laser mit einer Leistung bis zu 300 W eingesetzt. Höhere Laserleistungen sind für die industrielle Anwendung, beispielsweise für die Beschriftung in Fertigungsstraßen, beispielsweise für Verpackungen oder in Großdruckereien eingesetzt.

Geeignete Vorrichtungen und Schreibsysteme entsprechend den obigen Ausführungen sind in den Ansprüchen definiert.

Die folgenden Beispiele beschreiben die technische Realisierung ohne diese zu beschränken:

### Beispiel 1: Oberflächenverstärkter Farbeffekt

Auf einer Papieroberfläche wird zuerst ein Silberfilm von 45 nm Dicke aufgesputtert. Sodann wird durch Hochvakuumbedampfung eine Quarz-, Magnesiumfluorid-, Calciumfluorid- oder ähnliche transparent Schicht aufgebracht. Dabei wird das Papier im Hochvakuum von anhaftendem Wasser befreit, (Wassergehalt bis zu 5% erfordert lange Vorpumpzeiten). Ein Vorausheizen des Papiers kann den Pumpvorgang stark verkürzen. Sodann wird thermisch in einem Wolfram,- Molybdän- oder Tantal-Schiffchen oder mittels Elektronenstrahl (gegebenenfalls auch mit AC-Plasma) das gewünschte Material für Schicht (3) zumeist ebenfalls Silber verdampft. Dabei soll die Oberflächentemperatur des Papiers nicht über 200°C betragen um eine thermische Zersetzung der Papiermatrix zu vermeiden. Die Massendicke der aufgedampften oder sputter-gecoateten Silberschicht beträgt typischerweise zwischen 3 und 10 Nanometern wobei sich der Farbendruck mit steigender Schichtdicke von einem breitbandigen Spektrum über eine (oder mehrere) scharfe spektrale Banden in Richtung des Eindrucks von metallischen Oberflächen verschiebt. Um eine optimale Farbgebung zu erreichen kann Gold oder Silber z.B. mit 5 nm (Massendicke) innerhalb von 10 sec. bei einer Stromstärke von etwa 10 mA / inch² und einem Argondruck von 0,1 mbar gecoatet werden. Oft ist ein Haftvermittler für die Goldschicht nötig. Gold kann auch durch andere korrosionsstabile Metalle ersetzt werden.

### Beispiel 2: Farbschichteffekt auf Folien

Analog Beispiel 1 kann an Stelle von Papier jeder thermisch stabile Folie verwendet werden. PET, PEN, PP oder PE-Folien haben industriell am weiters Anwendung gefunden. Prinzipiell ist aber jeder Trägermaterial verwendbar. Insbvesonder Haftungsprobleme an manchen Oberflächen (Z.B. PE oder PP) machen eine Vorbehandlung der FOlie durch Coronaentladung, Abflammen, Abätzen oder Plasmaverfahren notwendig.

### Beispiel 3: Farbeffekt auf Material mit Zwischenschicht mit höherem Brechungsindex

Auf Papier Folie, Blech, Pigment (z.B. Glimmer) oder Kunststoffoberfläche wird durch reaktives Hochvakuumbedampfung oder reaktives Sputtern eine Schicht von Aluminiumoxid, Zirkonoxid, Zinnoxid, Titanoxid, Nioboxid oder verwanden Materialen wie Nitriden oder Oxinitriden aufgebracht. Die meisten Oxide weisen eine effiziente Reflexion von Licht an der Phasengrenze auf. Danach wird wie in Beispiel 1 verfahren und eine Schicht niederbrechender Materialien z.B. Magnesiumfluorid-, Calciumfluorid-, Bariumfluorid- aufgebracht. Das weitere Vorgehen erfolgt analog wie bereits in Beispiel 1 beschrieben.
Reaktives Dampfen und Sputtern (meist Oxide, Nitride oder Oxinitride) benötigt eine präzise Prozessgaskontrolle um die nötige Stöchiometrie der Materialien zu gewährleisten. Im Gegensatz zu Metallen ist das Sputtern von reinen Nichtleitem nur mit speziellen Sputteranlagen, zumeist AC- oder DC-Pulsanlagen, und mit relativ hoher Sputterleistung möglich. Nitride oder Oxide sputtern zumeist bis zu etwa 10mal langsamer als die korrespondierenden Metalle.

### Beispiel 4: Farbeffekt mit semitransparentem Spiegel

Auf die Material oder Pigmentoberfläche wird durch chemisch, durch Hochvakuumbedampfung oder Sputtern zuerst eine nicht dichte Partikellage oder eine sehr dünne transparente Schicht eines Metalls geeigneter Haftung und Korrosionsstabilität aufgebracht. Geeignete Metalle sind hier z.B. Gold (zumeist nur mit Haftschicht), Silber (mäßig stabil und schlecht haftend), Palladium (stabil aber schlecht haftend) besser Titan, Niob, Chrom, Nickel, Zinn, o.ä.. Dies geschieht durch Sputtern oder thermisches bzw. Elektronenstrahlverdampfen. Der weitere Aufbau erfolgt wie in Beispiel 1 beschrieben.

### Beispiel 5: Andere Aufbringungstechniken

Im Prinzip ist bei allen beschriebenen Anwendungen auch immer das Lackieren oder Drucken von Nanopartikeln erfindungsgemäß sowohl als Nanopartikel (4) als auch zur Veränderung der Phasengrenzeigenschaften der Materialoberfläche (2) möglich. Sodann wird wie in Beispiel 1 beschrieben verfahren.

### Beicpiel 6: Farbschicht auf lackierten Metalloberflächen

Eine handelsüblichen Edelstahl-, Messing- oder Aluminiumfolie wird analog Beispiel 1 strukturiert. Um eine optimale Haftung zu erreichen wird zumeist das Material zuerst Haftsilianen beschichtet. Das Silan wird zumeist auf die Oxidschicht aufgesprüht und zwischen 80°C und 160 °C eingebrannt. Dabei werden die Silanschichten vernetzt.
Nanopartikel könne auch als Metallkolloide aus einer konzentrierten (» 100 mg Metall/l) aufbracht und chemisch bzw. adsorptiv gebunden werden. Kolloidale Lösungen geringerer Konzentration sind zumeist (bedingt durch die lange Verfahrenszeit) für technische Prozesse ungeeignet. Kolloide werden zumeist mit Polymeren geschützt verwendet oder mit einer 1 -100 nm dicken glas- oder polymerartigen Schicht überzogen eingesetzt. Partikelschutzpolymere können so geladen werden, daß sie mit hoher Affinität an die entgegengesetztgeladene Oberfläche der Dünnschicht binden. Auch hydrophobe Anziehungskräfte können hier mit Vorteil verwendet werden (Dünnschicht (3) aus Kunststofflack + Gold/Silber/Kupfer-Nanopartikel mit hydrophobem Monolayerthiol-überzogen).

### Beispiel 7: Oberflächenschutz mit Lacken

Nach Beispiel 1 bis 6 hergestellte Objekte werden mit Sprüh-, Rakel- oder Tauchlack aus Stärkelösung, Polyacrylaten, Polymethacrylaten, Polyurethanen oder Epoxyd-Harz überzogen. Der Lack wird getrocknet und wenn nötig bei erhöhter Temperatur ausgehärtet. Die genauen Aushärtebedingungen sind laut Angaben des Lackherstellers zu wählen. Ein Objekt kann auch mit Polymerlösung durch Sprüh-, Spinn- oder Tauchverfahren überzogen werden, sodann das Lösungsmittel entfernt und der Film durch UV-Strahlung (z.B. Acrylate), Elektronenstrahlen oder thermisch vernetzt werden.

### Beispiel 8: Oberflächenschutz im Sol/Gel-Verfahren

Analog werden die Objekte auch mit Sol/Gel-Lacken überzogen und diese üblicherweise bei Temperaturen zwischen 200 und 800°C eingebrannt. Typische Rohstoffe sind hier Metallate von Titan (z.B. Titanethoxylate), Tetraethoxysilan, Zirkonmetallate oder ähnliche Verbindungen die zumeist mit Wasser unter Hydrolyse zuerst zu Hydroxiden und nach thermischer Behandlung zu vernetzten, chemisch-mechanisch-stabilen Oxiden mit guter Oberflächenhaftung reagieren. Ein Vielzahl von handelüblichen Produkten kann hier eingesetzt werden. Die Schichtdicke der Lacke beträgt, je nach Anwendung, zwischen etwa 100 nm und vielen Mikrometern.

### Beispiel 9: Laser-Strukturierung der Schicht

Nach Beispiel 1 bis 6 hergestellte Objekte werden unter Verwendung eines thermisch oder photochemisch vernetzbaren Lacks hergestellt. Hierbei wird entweder ein Oberflächenfilm (2) auf das Objekt aufgebracht oder eine der Dünnschichten (3) durch den reaktiven Lack ersetzt. Primär sind hier durch Laserlicht veränderbare Lacke und Nanopartikelvorstufenlacke welche sich durch Laserlicht in dunkel metallische Nanopartikel verwandeln geeignet. Das Objekt wird dann unter Anwendung von IR-Strahlung durch ein optischen Schreibesystemen (z.B. Laserschreiber) räumlich definitiv farbig beschrieben.
Diese Vorgang verursacht entweder eine lokale Änderung des Brechungsindex und/oder der Schichtdicke der Dünnschichten (3) und/oder der Zahl der Nanopartikel an der Oberfläche (2) des Materials. Analog kann auch thermisch, elektrochemisch, mit Mikrowellen oder Elektronenstrahlen das Material optisch verändert werden. Die genannten Vorgänge führen zu einer farbigen Beschriftung der Oberflächen. Diese Technologie ist sowohl für in-situ Beschriftung, als Ersatz für Thermopapier aber auch zur Bedruckung von Folien und insbesondere als neuartiges elektronische Papier ("e-paper") geeignet.

### Beispiel 10: Reaktive Oberflächenbeschriftung

Nach Beispiel 1 bis 7 hergestellte Objekte werden unter Verwendung eines thermisch oder photochemisch vernetzbaren Lacks mit reaktiven Eigenschaften (z.B. wasserquellbar, temperaturreaktiv,...) hergestellt. Hierbei wird analog Beispiel 8 entweder ein Oberflächenfilm (2) auf das Objekt aufgebracht oder eine der Dünnschichten (3) durch den reaktiven Lack ersetzt. Primär sind hier UV-vernetzbare Hydrogele (Polyvinylpyrrolidone vernetzt mit Bisaziden), oder ionische Polymere (Polyacrylsäure-Copolymere,..) oder thermoreaktive Polymer (z.B. Poly-N-Isopropylacrylamid) Polymere geeignet. Die genauen Reaktionsbedingungen sind stark materialabhängig. Das mit den nötigen Schichten überzogene Objekt wird dann unter Anwendung der Strahlung eines Laserschreiber räumlich definitiv vernetzt. Dieser Prozess führt zu einer farbigen Beschriftung der Folien mit reaktiven Elementen die auf Temperatur, Feuchtigkeit, pH-Wert oder andere Umgebungsvariablen gezielt und mit räumlicher Auflösung ansprechen.

### Beispiel 11: Glimmerpigmente

50 g Glimmer mit einer Teilchengröße von etwa 10 µm und 0,75 g Russ (mittlere Teilchengröße: 15 nm, oder ein anderes schwarzes Farbpigment) werden gemischt und gerührt. Den überzogenen Glimmer suspendiert man in 500 ml Wasser und fügt z.B. Teraethoxysilan, Aluminiumtripropoxid, Tetraethoxytitanat, Zinnchloridlösung, Titantetrachloridlösung oder andere Filmbildner zu. Im Falle der Verwendung von Halogen - freisetzenden Chemikalien muss der pH-Wert der Lösung durch Zugabe von Basen konstant gehalten werden. Nach der Abscheidung der Zwischenschicht werden die Teilchen abfiltriert, mit Wasser gewaschen und getrocknet.
Auf die Pigmente werden Nanopartikel oder deren chemische, laserumwandelbare Vorstufen gecoatet.
Der Glimmer kann durch Glasplättchen, Talk, Kaolin, oder andere Träger ersetzt werden. Auch faserförmige Pigmente wie Cellulose oder Polymerfasern können verwendet werde,

### Beispiel 12: Coating von reaktiven Schichten zur Nanopartikelerzeugung

Pigmente mit Abstandsschicht (zur Einstellung des gewünschten Farbtones) wird mit einem löslichen Metallsalz oder einer Suspension feinster, vorzugsweise kleiner als 100 nm großer Partikel aus der Gruppe der Metalle V, Cr, Mn, Fe. Co, Ni, Cu, Ag, Sn, Pb, C, Si, Ge und Bi überzogen. Der Prozess kann durch Präzipitation mittels pH-Änderung, Lösungsmitteländerung oder Zugabe eines Anions mit präzipitierenden Eigenschaften unterstützt werden.
Diese Partikel sind entweder selbst chromophor oder werden als Precursor bevorzugt mit dem Laser in Oxide oder andere oxidierte Verbindungen z.B. Phosphate mit chromophoren Charakter verwandelt.
Um einen raschen Laserschreibprozeß zu ermöglichen soll die mittlere Massendicke bei metallischen Partikeln etwa 5 nm, bei chromophoren Partikel proportional zur ihrem Extinktionskoeffizienten mehr, betragen.

### Beispiel 13: Deckschicht

Partikel laut Beispiel 12 werden mit einem Coatingmittel, bevorzugt einem Polymer, vermischt und auf die Oberfläche eines Objekts aufgebracht. Danach wird zumeist eine Deckschicht aus einem weiteren bevorzugt organischen Polymer (bei Außenanwendung jedoch auch ein anorganischer z.B. Sol-Gel Überzug) aufgebracht. Die Schichtdicke des Überzugs beträgt zwischen 0.1 und 100 µm, bevorzugt zwischen 1 - und 20 µm. Die Deckschicht dient nicht nur zum Schutz der farbigen Schichten sondern nimmt aktiv Laserenergie auf und leitet sich als Hitze und oder chemische Energie and die Nanopartikel bzw. Precursorschicht weiter.

### Beispiel 14: Streuende Deckschicht

Ein Aufbau analog Beispiel 13 wird mit einer Deckschicht aus einem streuenden Material (zumeist weiß gewählt) überzogen, dass nach Einwirkung des Laserstrahls transparent - weil kurz aufgeschmolzen wird. Bevorzugt sind hier Nanopartikel z.B. aus Polystyrol oder ähnlichen Polymer im Einsatz die die Laserenergie aufnehmen, weiterleiten und sodann einen schützenden Deckfilm bilden. Die streuende Deckschicht hat eine Dicke von 1- 100 µm bevorzugt 3 - 20 µm.

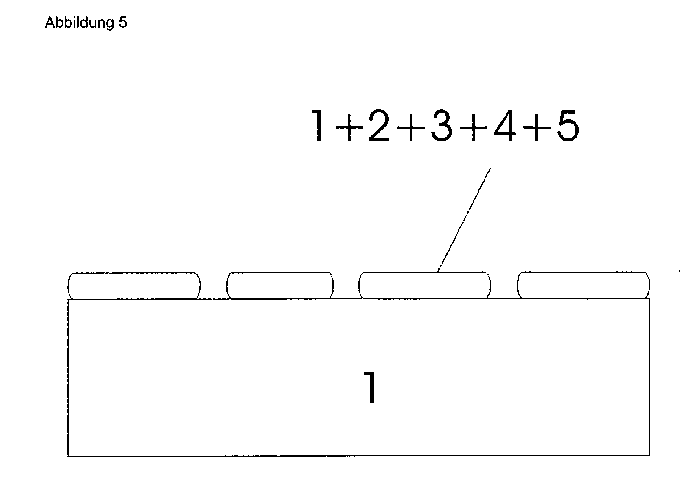

Der erfindungsgemäße Aufbau ist durch Zeichnungen erläutert - natürliche oder artifizielle Strukturen zur Farbeinstellung mit Ziffer 6 gekennzeichnet:
Abbildung 1: Aufbau der Dünnschichtstruktur nach Anspruch 1
Abbildung 2: Beschriftung der Dünnschichtstruktur durch Änderung der
optischen Dichte der Deckschicht (5) mittels Laser oder Wärme
Abbildung 3: Beschriftung der Dünnschichtstruktur durch Änderung der
optischen Dicke der Schicht (4) mittels Laser oder Wärme
Abbildung 4: Beschriftung der Dünnschichtstruktur durch Änderung der
optischen Dichte der reflektierenden Schicht (3) mittels Laser oder Wärme
Abbildung 5: Aufbau der Dünnschichtstruktur mit Pigmentzwischenträger - Der Farbeffekt wird am Pigment erzielt bei gleichem nanometrischen Aufbau wie in
Abbildung 1 und gleichen Effekten wie in Abbildung 2 bis 4 erläutert.

## Patentansprüche

1. Papier, Pappe, Wellkartons, Pigmentpartikel, Folien, spritz- oder druck-gegossene Kunststoffteile, Metall, keramische Oberflächen, Lackschichten oder Korrosionsschutzschichten beschichtet mit mehreren Dünnschichten, wobei das Material selbst oder eine erste Schicht eine Spiegelschicht ist, die selbst oder an der Schichtgrenze elektromagnetische Wellen (3) zumindest teilweise reflektiert, eine zweite transparente Schicht (4) oberhalb und/oder unterhalb dieser Spiegelschicht aufgebracht ist und auf dieser transparenten Schicht zumindest eine dritte Schicht metallischer oder stark chromophorer Partikel oder Nanopartikel (5) oder deren chemischen Vorstufen oder ein metallischer Dünnfilm aufgebracht ist, und der gesamte Aufbau durch die Einwirkung von Licht oder durch direkten Kontakt oder starke Annäherung an heiße Objekte räumlich definiert und strukturiert für das menschliche Auge erkennbar farblich verändert werden kann.

2. Papier, Pappe, Wellkartons, Pigmentpartikel, Folien, spritz- oder druck-gegossene Kunststoffteile, Metall, keramische Oberflächen, Lackschichten oder Korrosionsschutzschichten nach Anspruch 1 oder 2 1, **dadurch gekennzeichnet, dass** der Aufbau durch Einwirkung einer pixel- oder vektorartig arbeitenden Lichtquelle räumlich definiert und strukturiert für das menschliche Auge erkennbar farblich verändert wird.

3. Papier, Pappe, Wellkartons, Pigmentpartikel, Folien, spritz- oder druck-gegossene Kunststoffteile, Metall, keramische Oberflächen, Lackschichten oder Korrosionsschutzschichten nach Anspruch 1 oder 2 1, **dadurch gekennzeichnet, dass** der Aufbau durch Laserlicht, LED- Licht, Kurzbogenlampen, Blitzentladungslampen räumlich definiert und strukturiert für das menschliche Auge erkennbar farblich verändert wird.

4. Papier, Pappe, Wellkartons, Pigmentpartikel, Folien, spritz- oder druck-gegossene Kunststoffteile, Metall, keramische Oberflächen, Lackschichten oder Korrosionsschutzschichten nach einem der Ansprüche 1 bis 3, **dadurch gekennzeichnet, dass** die für das menschliche Auge erkennbare Veränderung der Aufbaus gegebenenfalls zusätzlich durch thermische oder elektromagnetische Strahlung oder durch mechanische Behandlung fertig gestellt bzw. fixiert wird.

5. Verfahren zur Herstellung von optisch thermisch beschreibbaren Materialen, wie Papier, Pappe, Wellkartons, Pigmentpartikel, Folien, spritz- oder druck-gegossene Kunststoffteile, Metall, keramische Oberflächen, Lackschichten oder Korrosionsschutzschichten, **dadurch gekennzeichnet, dass** auf oder in dem Material (1, 2) mehrere Dünnschichten aufgebracht werden, wobei das Material oder eine Schicht eine Spiegelschicht darstellt, die selbst oder an der Schichtgrenze elektromagnetische Wellen (3) zumindest teilweise reflektiert, eine transparente Schicht (4) oberhalb und/oder unterhalb dieser Spiegelschicht aufgebracht wird und auf dieser transparenten Schicht zumindest eine Schicht metallischer oder stark chromophorer Partikel oder Nanopartikel (5) oder deren chemischen Vorstufen oder ein metallischer Dünnfilm aufgebracht wird.

6. Verfahren zur farbgebenden Beschriftung von Materialien, **dadurch gekennzeichnet, dass** auf oder in dem Material (1, 2) mehrere Dünnschichten aufgebracht werden, wobei das Material oder eine Schicht eine Spiegelschicht darstellt, die selbst oder an der Schichtgrenze elektromagnetische Wellen (3) zumindest teilweise reflektiert, eine transparente Schicht (4) oberhalb und/oder unterhalb dieser Spiegelschicht aufgebracht wird und auf dieser transparenten Schicht zumindest eine Schicht metallischer oder stark chromophorer Partikel oder Nanopartikel (5) oder deren chemischen Vorstufen oder ein metallischer Dünnfilm aufgebracht wird und der gesamte Aufbau durch die Einwirkung von Licht oder durch direkten Kontakt oder starke Annäherung an heiße Objekte räumlich definiert und strukturiert für das menschliche Auge erkennbar farblich verändert wird.

7. Verfahren nach Anspruch 6, **dadurch gekennzeichnet, dass** beliebige Zeichen, Zeichenketten, Symbole, Buchstaben, Linien, Designs oder graphische Informationen (6) durch eine Veränderung der Struktur der Dünnschichten sichtbar werden.

8. Verfahren nach einem der Ansprüche 6 oder 7, **dadurch gekennzeichnet, dass** zumindest ein Teil der farblichen Veränderungen durch eine, von der Dicke und/oder dem Brechungsindex der transparenten Schicht (4) abhängige, für das menschliche Auge oder mittels eines Detektionssystems erkennbare Resonanzfarbe hervorgerufen wird.

9. Verfahren nach einem der Ansprüche 6 bis 8, **dadurch gekennzeichnet, dass** zumindest ein Teil der farblichen Veränderungen durch eine Veränderung der Zahl und/oder der Größe und/oder der Form der Nanopartikel und/oder der Spiegelschicht hevorgerufen wird.

10. Verfahren nach einem der Ansprüche 6 bis 9, **dadurch gekennzeichnet, dass** die farblichen Veränderungen durch Generieren von chromophoren Nanopartikel aus farblosen und oder farbschwachen Metallsalzen durch thermische Einwirkung des Laser erfolgt.

11. Verfahren nach Anspruch 10, **dadurch gekennzeichnet, dass** die farblosen Metallsalze aus der Gruppe der Metalle V, Cr, Mn, Fe. Co, Ni, Cu, Ag, Sn, Pb, C, Si, Ge und Bi stammen.

12. Verfahren nach Anspruch 11 **dadurch gekennzeichnet, dass** Metallsalze als Oxalate, Carbonate, Formiate, Acetate, Hydroxide, Phosphate oder Hypophosphite vorliegen.

13. Verfahren nach Anspruch 12, **dadurch gekennzeichnet, dass** zusätzlich zu den Metallsalzen Reduktionsmittel oder Oxidationsmittel zugegeben werden, die thermisch aktivierbar sind.

14. Verfahren nach Anspruch 13 **dadurch gekennzeichnet, dass** als Reduktionsmittel Salze der Ameisensäure, Oxalsäure, reduzierende Stickstoffwasserstoffverbindungen wie Hydrazine, oder anorganische Reduktionsmittel wie Zinn(II)salze, Hypophosphite, Dithionite oder Borwasserstoffverbindugen verwendet werden um Metallnanopartikel oder niedere Oxide zu erzeugen.

15. Verfahren nach Anspruch 14, **dadurch gekennzeichnet, dass** als Oxidationsmittel Peroxide, Percarbonate, Perborate, Nitrate, Chlorate, Perchlorate, bzw. analoge Bromverbindugen verwendet werden um Metalloxidnanopartikel zu erzeugen.

16. Verfahren nach einem der Ansprüche 6 bis 15, **dadurch gekennzeichnet, dass** die elektromagnetische Wellen reflektierenden Schicht eine Dicke von < 800 nm aufweist.

17. Verfahren nach einem der Ansprüche 6 bis 16, **dadurch gekennzeichnet, dass** die transparente Zwischenschicht aus einem Fluorid oder einem Polymer besteht.

18. Verfahren nach Anspruch 17, **dadurch gekennzeichnet, dass** die eine poröse oder schaumartige polymere Zwischenschicht durch thermische Einwirkung des Laser in ihrer Schichtdicke verändert wird, wobei die Poren der Zwischenschicht mit einem Gas, vorzugsweise Luft, gefüllt sind.

19. Verfahren nach einem der Ansprüche 6 bis 18, **dadurch gekennzeichnet, dass** als Deckschicht über den Nanopartikeln bzw. deren Precursoren eine Schicht mit Licht-streuenden Eigenschaften verwendet wird, die den Farbeffekt überdeckt und durch den Laser in eine transparente, geschmolzene Schicht umgewandelt wird.

20. Verfahren nach Anspruch 19 **dadurch gekennzeichnet, dass** die Licht streuenden Partikel aus schmelzbarem Latex bestehen, eine rückgestreute Lichtfarbe von weiß oder weißlich haben und durch schmelzen der Latexpartikel zu einer Schicht transparent wird.

21. Verfahren nach Anspruch 19 **dadurch gekennzeichnet, dass** die Licht streuende Partikel aus Polystyrol, Polyvinylacetat, Celluloseestern oder Ethern, anderen Vinylpolymeren, Acrylaten, Methacylaten, Polyalkydharzen, oder deren Mischpolymeren bzw. Mischungen bestehen, wobei bevorzugt Polysytrollatex verwendet wird.

22. Verfahren nach einem der Ansprüche 6 bis 21, **dadurch gekennzeichnet, dass** die transparente Schicht eine Dicke von < 700 nm aufweist.

23. Verfahren nach einem der Ansprüche 6 bis 22, **dadurch gekennzeichnet, dass** der metallische Dünnfilm eine Dicke von < 100 nm aufweist.

24. Verfahren nach einem der Ansprüche 6 bis 23, **dadurch gekennzeichnet, dass** die Schicht metallischer oder stark chromophorer Partikel oder Nanopartikel eine Massendicke von < 100 nm aufweist.

25. Verfahren nach einem der Ansprüche 6 bis 24, **dadurch gekennzeichnet, dass** das Material aus Papier, Pappe, Wellkartons, Pigmentpartikeln Folien, spritz- oder druckgegossenen Kunststoffteilen, Metall, keramischen Oberflächen, Lackschichten oder Korrosionsschutzschichten besteht.

26. Verfahren nach einem der Ansprüche 6 bis 25, **dadurch gekennzeichnet, dass** zur räumlich definierten und strukturierten farblichen Veränderung der Beschichtung Laser mit einer Leistung bis zu 300 Watt verwendet werden.

27. Verfahren nach Anspruch 26, **dadurch gekennzeichnet, dass** der/die Laser (ein) Kohlendioxidlaser ohne externe Gasversorgung oder (eine) Laserdiode ist/sind.

28. Verfahren nach einem der Ansprüche 6 bis 25, **dadurch gekennzeichnet, dass** zur räumlich definierten und strukturierten farblichen Veränderung der Beschichtung Laser mit einer Leistung größer 300 Watt verwendet werden.

29. Verfahren nach einem der Ansprüche 6 bis 28, **dadurch gekennzeichnet, dass** die Spiegelschicht (3) eine metallische Schicht ist, wobei die metallischen oder stark chromophoren Partikel (5) dieser Schicht ausgewählt aus der Gruppe Silber, Gold, Palladium, Platin, Kupfer, Indium, Aluminium, Nickel, Chrom, Vanadium, Molybdän, Wolfram, Titan, Niob, Tantal, Zirkon, Zinn, Germanium, Wismut oder Silicium oder aus einem anderen leitfähigen Material, deren Verbindungen oder Legierungen sind.

30. Verfahren nach einem der Ansprüche 6 bis 29, **dadurch gekennzeichnet, dass** die metallischen oder stark chromophoren Partikel (5) durch die thermische Umwandlung oder bevorzugt mit Hilfe von Laserlicht insbesondere durch Reduktion von Metallverbindungen aus ihren bevorzugt farblosen Vorstufen gebildet werden und insbesondere eine Mischung bestehend zumindest aus einem Filmbildner, einer Metallverbindung und einem bei höherer Temperatur oder in flüssiger Phase wirkenden Reduktionsmittel zur Bildung dieser Schicht verwendet wird.

31. Verfahren nach einem der Ansprüche 6 bis 30, **dadurch gekennzeichnet, dass** die Zahl der metallischen oder stark chromophoren Partikel (5) durch die thermische Veränderung oder Auflösung der metallischen Partikel mit Hilfe von hochenergetischem Laserlicht zu farblosen Produkten bevorzugt durch feste und laserverflüssigbare Säuren oder Laugen oder laseraktivierbare Oxidationsmittel in der Schicht erreicht wird.

32. Verfahren nach einem der Ansprüche 2 bis 31, **dadurch gekennzeichnet, dass** die Dicke der transparenten Schicht (4) durch thermische Veränderung, Schäumen, Vernetzen oder thermischen Kollaps bevorzugt mit Hilfe eines Lasers oder thermisch eingestellt wird.

33. Verfahren nach Anspruch 32, **dadurch gekennzeichnet, dass** der Laser eine Gaslaser, insbesondere ein Kohlendioxidlasers oder Diodenlaser ist.

34. Verfahren nach einem der Ansprüche 6 oder 33, **dadurch gekennzeichnet, dass** die Absorption der Laserlichtenergie durch Laserlicht-absorbierende Zusätze in der Schicht gesteigert wird.

35. Verfahren nach Anspruch 34, **dadurch gekennzeichnet, dass** die Zusätze Carboxylgruppen enhaltende Moleküle oder Metallsalze sind.

36. Verfahren nach einem der Ansprüche 6 bis 35, **dadurch gekennzeichnet, dass** die Aufbringung der Schichten (3, 4, 5) auf Partikeln erfolgt, die anschließend durch druck-, lack- oder papiertechnische Verfahren wie Aufrakeln, Sprühen, Tauchbeschichten oder gängige Druckverfahren, wie Tief- Flexo-, Sieb-, Offset-, Digitaldruck, Curtain Coating oder Walzenauftragsverfahren mit Walzen- Gleich- oder Gegenlauf auf das Material aufgebracht werden.

37. Verfahren nach Anspruch 36, **dadurch gekennzeichnet, dass** die Partikel eine Größe von maximal drei Millimeter aufweisen.

38. Verfahren nach Anspruch 37, **dadurch gekennzeichnet, dass** die Partikel eine Größe von 0,5 bis 60 Mikrometer aufweisen.

39. Verfahren nach einem der Ansprüche 35 bis 37, **dadurch gekennzeichnet, dass** die Partikel flache metallische Partikel oder anorganische Plättchen wie Glimmer, Kaolin, Talk, TiO₂ oder Glas sind.

40. Verfahren nach einem der Ansprüche 36 bis 39, **dadurch gekennzeichnet, dass** als Material Papier, Pappe, Wellkarton verwendet wird und die Partikel durch in der Papierindustrie übliche Verfahren der letzten Papierbeschichtungsschritte verwendet werden.

41. Verfahren nach einem der Ansprüche 6 bis 40, **dadurch gekennzeichnet, dass** eine Oberflächenstrukturierung die Farbgebung durch die räumliche Ordnung oder Umordnung der beschichteten Partikel oder eines Teils der Partikel insbesondere durch thermische oder mechanische Veränderung der Schichten vorzugsweise Prägen erfolgt.

42. Verfahren nach einem der Ansprüche 36 bis 40, **dadurch gekennzeichnet, dass** auf die Oberfläche des Materials die beschichteten Partikel mit einem Adhäsionsmittel gebunden werden.

43. Verfahren nach Anspruch 42, **dadurch gekennzeichnet, dass** das Adhäsionsmittel ein Kleber auf Stärkebasis oder auf Basis biologisch verträglicher und/oder abbaubarer Polymere ist.

44. Mit einem Laser beschreibbare Materialien hergestellt nach einem Verfahren nach einem der Ansprüche 6 bis 43 oder Materialien nach einem der Ansprüche 1 bis 4, **dadurch gekennzeichnet, dass** die eingesetzten Metalle oder Metallsalze sich in einer Kläranlage im Recyclingprozess mit einer Effizienz von zumindest 80 % zurückgewinnen lassen.

45. Mit einem Laser beschreibbare Materialien nach Anspruch 44, **dadurch gekennzeichnet, dass** die eingesetzten Metalle oder Metallsalze die Metalle Aluminium, Titan, Silber, Kupfer, Chrom und Zinn und deren Salze umfassen.

46. Vorrichtung zur Durchführung eines Beschriftungsverfahrens auf ein gemäß einem Verfahren nach einem der Ansprüche 6 bis 43 hergestellten beschichteten Materials, **dadurch gekennzeichnet, dass** ein Laser in einem für den Anwender nicht ohne Gewaltanwendung während des Betriebs zu öffnenden Gehäuse montiert ist um die hohe Laserleistung im Bürobereich ohne Arbeitsschutz und im Rahmen der rechtlichen Normen einsetzten zu können.

47. Vorrichtung nach Anspruch 46, **dadurch gekennzeichnet, dass** die im Druckbetrieb erzeugten Abgase durch ein einfaches Filter bevorzugt mit Aktivkohle gebunden werden.

48. Vorrichtung nach einem der Ansprüche 45 bis 47, **dadurch gekennzeichnet, dass** der Laser mit einer so geringen Leistung und/oder einer so raschen Vorschubgeschwindigkeit betrieben wird, dass die im Druckbetrieb erzeugten Abgase durch ein einfaches maximal jährlich zu wechselndes Filter gebunden werden können.

49. Schreibsystem zur Beschriftung von mit einem Laser direkt beschreibbaren Materialien hergestellt nach einem Verfahren nach einem der Ansprüche 6 bis 43 oder Materialien nach einem der Ansprüche 1 bis 4 oder 44 oder 45, **dadurch gekennzeichnet, dass** zumindest ein Laser der auf das zu beschreibende Material gerichtet ist, ein Fokussiersystem für den Strahl, ein Strahlablenkungssystem, ein Modulationssystem zur Steuerung der Laserintensität, ein Vorschubsystem für das Medium und die notwendige Elektronik zur Umwandlung der Befehle des Computers in Steuerinformation des Beschriftungssystems in einer Einheit vorzugsweise einem Gehäuse integriert, aufweist.

50. Schreibsystem zur Beschriftung von mit einem Laser direkt beschreibbaren Materialien hergestellt nach einem Verfahren 6 bis 43 oder Materialien nach einem der Ansprüche 1 bis 4 oder 44 oder 45, **dadurch gekennzeichnet, dass** ein Kohlendioxidlaser oder ein Diodenlaser, der auf das zu beschreibende Material gerichtet ist, ein Fokussiersystem für den Strahl, ein Strahlablenkungssystem mit Galvanometerspiegel und oder Q-Schalter, ein Modulationssystem zur Steuerung der Laserintensität, ein Vorschubsystem für das Medium und die notwendige Elektronik mit Mikroprozessor zur Umwandlung der Befehle des Computers in Steuerinformation des Beschriftungssystems in einer Einheit vorzugsweise einem Gehäuse von weniger als 30 kg integriert sind und dabei die Laserstrahlung in der Weise über das Papier geführt wird, dass keine Licht aus der Gehäuse gelangen kann und das Gehäuse gegen Öffnung während des Schreibvorgang derart gesichert ist, dass jedes Öffnen oder Aufbrechen des Gehäuses zu einem Abschalten des Laserstrahls führt.

51. Schreibsystem zur Beschriftung von mit einem Laser direkt beschreibbaren Materialien hergestellt nach einem Verfahren 6 bis 43 oder Materialien nach einem der Ansprüche 1 bis 4 oder 44 oder 45, **dadurch gekennzeichnet, dass** die Sensitivität des Materials derart eingestellt ist, dass mit einem Laser von weniger als 300 Watt Leistung die Durchlaufzeit eines A4 oder Letter großen Mediums bei zumindest 300 dpi weniger als fünfzehn Sekunden beträgt.
